**Europäisches Patentamt**

**European Patent Office**

**Office européen des brevets**

(19)

(11) Numéro de publication : **0 410 909 B1**

(12) **FASCICULE DE BREVET EUROPEEN**

(45) Date de publication du fascicule du brevet :
**22.06.94 Bulletin 94/25**

(51) Int. CI.⁵ : **H04N 3/30, H04N 5/44**

(21) Numéro de dépôt : **90420353.6**

(22) Date de dépôt : **23.07.90**

(54) **Dispositif de conversion d'un balayage ligne en un balayage en dents de scie verticales par bandes.**

(30) Priorité : **27.07.89 FR 8910385**

(43) Date de publication de la demande :
**30.01.91 Bulletin 91/05**

(45) Mention de la délivrance du brevet :
**22.06.94 Bulletin 94/25**

(84) Etats contractants désignés :
**DE FR GB IT NL**

(56) Documents cités :
**EP-A- 0 057 836**
**DE-A- 3 136 029**
**GB-A- 2 158 674**

(73) Titulaire : **SGS-THOMSON
MICROELECTRONICS S.A.
7, Avenue Galliéni
F-94250 Gentilly (FR)**

(72) Inventeur : **Artieri, Alain
7, Alée des Eyminées
F-38240 Meylan (FR)**

(74) Mandataire : **de Beaumont, Michel
1bis, rue Champollion
F-38000 Grenoble (FR)**

EP 0 410 909 B1

## Description

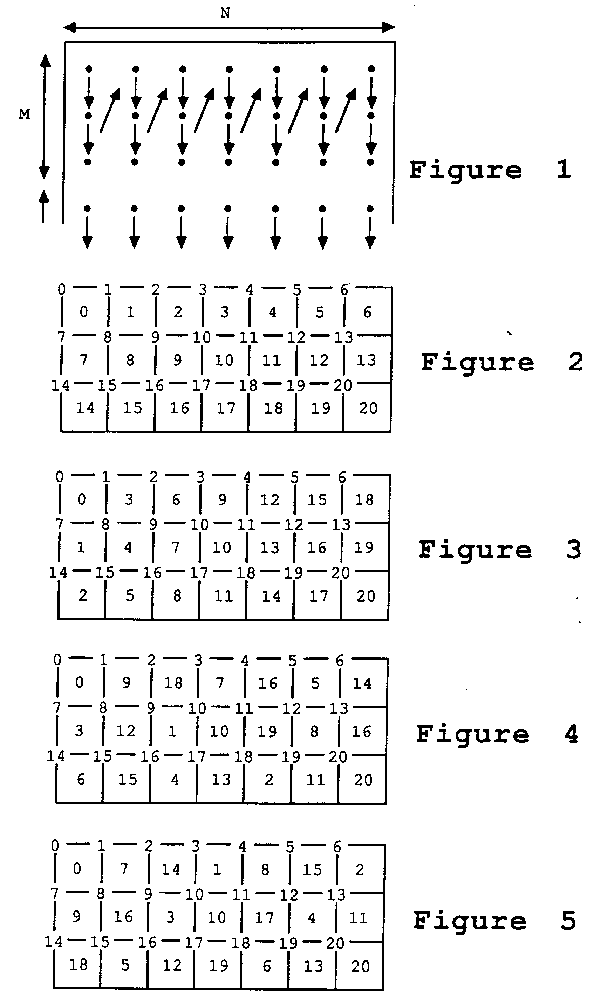

Dans diverses applications de traitement d'image ou plus généralement de traitement de données, on souhaite convertir une image résultant d'un balayage horizontal ligne par ligne en une image balayée en dents de scie verticales par bandes. Ainsi, comme l'illustre la figure 1, étant donné une image comprenant des lignes successives de N éléments d'image (pixels) dont chacun correspond à un mot de données, on souhaite effectuer une lecture en dents de scie par bandes de M lignes, de la façon illustrée en figure 1.

La façon la plus classique pour réaliser une telle conversion consiste à utiliser deux mémoires RAM ayant chacune la dimension d'une bande de MN données. Les données correspondant au premier balayage ligne sont mémorisées dans la première mémoire puis elles sont lues dans l'ordre souhaité du balayage en dents de scie par bandes tandis que les données de la bande suivante sont écrites dans l'autre mémoire et ainsi de suite les deux mémoires sont alternativement lues et écrites.

Ce procédé présente l'inconvénient évident de nécessiter deux mémoires avec leurs systèmes indépendants d'adressage.

La présente invention propose d'utiliser une seule mémoire d'une capacité de MN mots pour réaliser cette opération et propose également un circuit permettant de fournir automatiquement des adresses dans lesquelles on va lire et écrire simultanément des données dans des cases sélectionnées de la mémoire.

Pour atteindre ces objets, la présente invention prévoit un dispositif de conversion d'un balayage linéaire de lignes successives de N données en un balayage en dents de scie par bandes d'une hauteur de M lignes et couvrant toutes les données de ces M lignes , comprenant une mémoire de MN mots dans laquelle sont séquentiellement écrites les MN premières données puis dans laquelle les données suivantes sont séquentiellement écrites tandis que les données existantes sont lues en de mêmes adresses successives $A_{i,j}$, i déterminant un numéro d'ordre des données dans la mémoire ($0<i<MN-1$) et j un numéro de bande ($1<j<n$) ; et un générateur d'adresse fournissant les adresses $A_{i,j}$ de sorte que $A_{i+1,j} = (A_{i,j} + x_j)$ Modulo($MN-1$), $x_j$ étant un nombre tel que $x_{j+1} = N.x_j$ Modulo ($MN-1$) et $x_1 = 1$.

Selon un mode de réalisation de la présente invention, le générateur d'adresse comprend un premier registre de la valeur $x_j$ ; un deuxième registre de valeur d'adresse ($A_{i,j}$) ; un additionneur additionnant la sortie du premier registre et la sortie du deuxième registre ($x_j + A_{i,j}$) ; des moyens (S2, SEL1) pour transférer la plus petite des valeurs positives ($x_j + A_{i,j}$) et $[x_j + A_{i,j} - (MN-1)]$ vers le deuxième registre ; et des moyens pour, à chaque changement de bande, transférer la valeur ($x_{j+1}$) dans le premier registre ($x_j$), et forcer à zéro le contenu du deuxième registre ($A_{0,j}$).

La présente invention va être décrite plus en détail dans le cadre d'un mode de réalisation particulier en relation avec les figures jointes parmi lesquelles :

la figure 1 représente schématiquement le but à atteindre par la présente invention à savoir une conversion de balayage ligne en balayage en dents de scie par bandes ;

les figures 2 à 5 représentent des remplissages successifs de la mémoire selon la présente invention ;

la figure 6 représente un circuit permettant d'obtenir les adresses successives recherchées d'adressage de la mémoire.

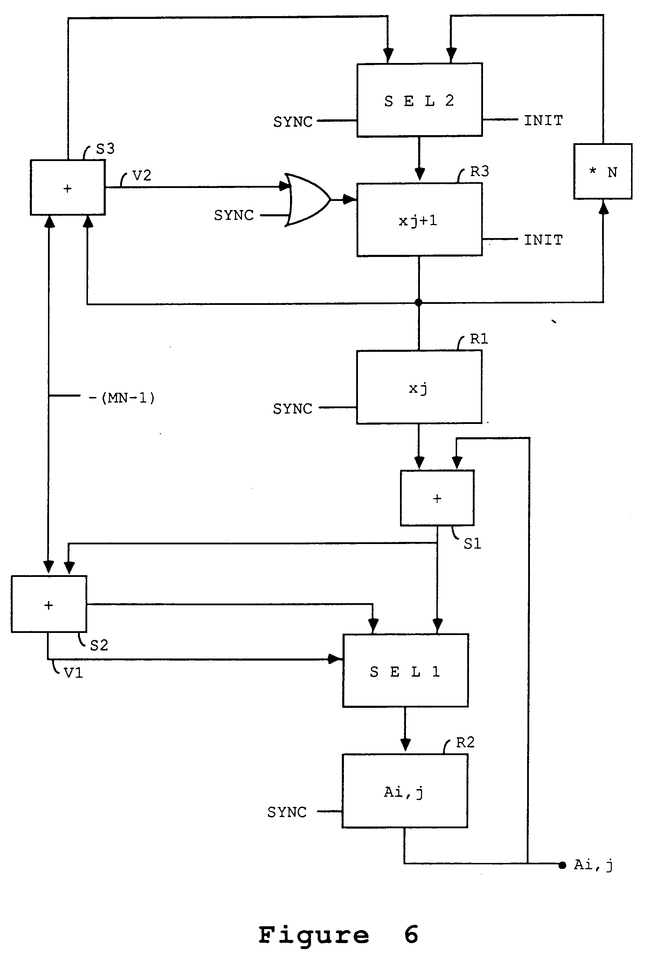

L'objet de la présente invention va être exposé en relation avec les figures 2 à 5 qui représentent des contenus successifs d'une mémoire RAM unique. On suppose dans l'exemple illustré que cette mémoire correspond à une bande comprenant trois ($M=3$) lignes de sept ($N=7$) mots, les cases mémoire étant numérotées de 0 à 20. Initialement, comme le représente la figure 2, les données séquentielles sont écrites dans les cases correspondantes.

Une fois la mémoire remplie, elle est lue en dents de scie, c'est-à-dire dans l'ordre :

0 7 14 1 8 15 2 9 16 3 10 17 4 11 18 5 12 19 6 13 20

A chaque lecture d'une case, la donnée incidente est inscrite dans la case qui vient d'être lue. Les cases sont donc remplies des données successives de la façon indiquée en figure 3.

Ensuite, il faut à nouveau rechercher successivement les données 0, 7, 14, ... . On note à partir de la figure 3 qu'elles se trouvent aux adresses successives :

0 9 18 7 16 5 14 3 12 1 10 19 8 17 6 15 4 13 2 11 20

La figure 4 montre les données séquentielles inscrites dans les cases correspondantes à savoir que la donnée 0 est dans la case 0, la donnée 1 dans la case 9 où se trouvait la donnée 7, la donnée 2 dans la case 18 où se trouvait la donnée 14, et ainsi de suite.

Si l'on veut lire le contenu de la mémoire de la figure 4 dans l'ordre des données 0, 7, 14 ... on est amené à lire les cases mémoire dans l'ordre :

0 3 6 9 12 15 18 1 4 7 10 13 16 19 2 5 8 11 14 17 20

et l'on écrit à nouveau dans la mémoire lors de chaque lecture la donnée incidente. Le remplissage correspondant est illustré en figure 5. On voit que, si l'on veut lire les données de la figure 5 dans l'ordre 0, 7, 14 ..., on arrive à nouveau à un remplissage identique à celui de la figure 2 et le cycle se répète jusqu'à lecture de toutes les bandes de l'image.

Les adresses successives d'adressage de la mémoire RAM pourraient être mémorisées dans des mémoires ROM mais ceci exigerait une capacité de mémorisation très importante, au moins égale à celle de la deuxième mémoire RAM présente dans le cadre du mode de réalisation à deux RAM susmentionné.

Ainsi, la présente invention prévoit un circuit permettant de générer les adresses successives $A_{i,j}$, où i désigne l'adresse d'une case mémoire (une adresse variante entre 0 et 20 dans l'exemple précédemment décrit) et où j correspond à un numéro de bande. Ainsi, i est compris entre 0 et MN-1, N étant le nombre de mots dans une ligne et M le nombre de lignes dans une bande et j est un numéro de bande qui est incrémenté d'une unité quand on passe d'une bande à la suivante.

Un mode de réalisation du circuit selon la présente invention est illustré en figure 6. Il comprend un premier registre R1 de mémorisation d'une valeur $x_j$, ce registre étant initialement chargé à une valeur 1. Un deuxième registre R2 contient la valeur de l'adresse $A_{i,j}$ en cours. Les sorties des registres R1 et R2 sont fournies à un premier additionneur S1 dont la sortie est envoyée d'une part à un circuit de sélection SEL1 et d'autre part à un deuxième additionneur S2 qui soustrait de la sortie de S1 la valeur (MN-1). L'additionneur S2 comprend une sortie de validation V1 qui indique si le résultat de l'opération est strictement positif. Cette sortie est envoyée au sélecteur SEL1 qui reçoit comme deuxième entrée la sortie de l'additionneur S2. Ainsi, si le signal V1 indique que le résultat de S2 est positif, le sélectionneur SEL1 sélectionne la sortie de S2 ; sinon, il sélectionne la sortie de S1 pour l'envoyer dans le registre R2 et fournir une nouvelle valeur $A_{i,j}$. L'ensemble des circuits S1, S2, SEL1 et R2 est actionné au rythme de la séquence d'adresses (horloge de données) et fournit des adresses $A_{i,j}$ pour des valeurs de i successives.

Quand on passe d'une bande à la suivante, c'est-à-dire que la valeur j s'incrémente, un signal de synchronisation SYNC remet à zéro la valeur de l'adresse dans le registre R2 et met une valeur suivante ($x_{j+1}$) dans le registre R1 de la valeur $X_j$.

Cette valeur $x_{j+1}$ peut être obtenue de la façon illustrée dans la partie supérieure de la figure. La sortie d'un registre R3, qui correspond initialement au contenu du registre R1, est appliquée à un circuit de sélection SEL2 après multiplication par la valeur N. La sortie du circuit SEL2 est envoyée au registre R3 destiné à mémoriser la valeur $x_{j+1}$, au moins à chaque occurrence du signal SYNC qui est un signal apparaissant tous les MN coups d'horloge de données à chaque changement de bande (horloge de bande). La sortie du registre R3 est également envoyée à un additionneur S3 qui soustrait de la valeur qu'il contient la valeur MN-1. Comme l'additionneur S2, l'additionneur S3 comprend une sortie de validation V2 indiquant si le résultat de l'opération est strictement positif. La sortie de l'additionneur S3 est envoyée à une deuxième entrée du circuit de sélection SEL2 et se substitue à sa valeur de sortie précédente. Si le résultat est strictement positif, le signal V2 envoyé par l'intermédiaire d'une porte OU au registre R3 entraine le transfert de la valeur de sortie du sélecteur dans ce registre R3 ; s'il est négatif ou nul, le contenu du registre n'est pas modifié.

Grâce à l'opération des additionneurs S2 et S3 et des sélecteurs SEL1 et SEL2, on notera que l'on obtient :

$$x_{j+1} = Nx_j \text{ Modulo}(MN - 1), \text{ et}$$
$$A_{i+1,j} = (A_{i,j} + x_j) \text{ Modulo}(MN - 1).$$

On définit ici l'opération A Modulo(MN-1) par :

A Modulo(MN-1) = A si A < MN-1,

A Modulo(MN-1) = MN-1 si A = MN-1, et

A Modulo(MN-1) = A-(MN-1) tant que A > MN-1.

Si l'on prend des exemples de valeurs numériques tels que ceux des figures 2 à 5, on voit que ces opérations conduisent au remplissage des tableaux de la façon indiquée précédemment.

Le circuit selon la présente invention est particulièrement simple et occupera généralement beaucoup moins de place sur une puce de silicium que des mémoires ROM contenant les adresses successives dont on doit affecter les remplissages successifs des blocs mémoire contenant une bande d'image.

En outre, on notera dans le circuit ci-dessus que la valeur $x_{j+1}$ ne doit être disponible que tous les MN coups d'horloge de données, lors de l'apparition du signal SYNC, c'est-à-dire que le circuit de la partie supérieur de la figure 6 peut fonctionner relativement lentement et donc que le multiplieur par N n'a pas besoin d'être un multiplieur rapide sophistiqué.

En effet, si l'on se place immédiatement après l'apparition d'un signal SYNC alors que le registre R3 contenait la valeur xj qu'il vient de transférer au registre R1, ce registre R3 reçoit la valeur $Nx_j$ calculée au cours du cycle d'horloge précédent. La boucle S3, SEL2, R3 permet de remplacer en quelques cycles d'horloge de données cette valeur $Nx_j$ par $Nx_j$ Modulo (MN-1) qui est la nouvelle valeur $x_{j+1}$. Le multiplieur dispose alors de tout le reste du cycle de l'horloge de bande pour calculer la valeur $Nx_{j+1}$ qui sera transférée au selecteur SEL2 lors de l'apparition du signal SYNC.

Pour éviter d'attendre un temps de multiplication initial, on prévoira des entrées d'initialisation INIT vers le registre R3 et le sélecteur SEL2 pour introduire par exemple les valeurs initiales 1 dans R3 et N dans SEL2 au premier cycle.

Par ailleurs, on notera que le circuit selon la présente invention permet de façon inverse de réaliser la conversion d'un balayage en dents de scie par bande en un balayage ligne en changeant simplement dans le multiplieur la constante N par la constante M.

Selon un aspect de la présente invention, on notera que les valeurs de xj se répètent régulièrement selon un cycle qui dépend de la dimension de la bande considérée. Ce cycle était de 4 dans l'exemple des figures 2 à 5. Le calcul montre que pour des bandes de 8 lignes le cycle sera de :

844 pour des lignes de 720 données
39 pour des lignes de 721 données
20 pour des lignes de 722 données
13 pour des lignes de 1024 données
182 pour des lignes de 1025 données
1316 pour des lignes de 1026 données

Ces exemples particuliers sont données car des lignes de 720 et de 1024 données correspondent à des cas envisagés pour la télévision numérique. On constate que, pour certaines dimensions de bandes, seul un petit nombre de valeurs xj apparaît (20 pour 8 lignes de 722 données et 13 pour 8 lignes de 1024 données). En conséquence, selon une variante de la présente invention, dans le cas d'un circuit dédié à une application spécifique, on pourra remplacer les circuits d'élaboration des valeurs xj apparaissant à la partie supérieure de la figure 6 par une ROM mémorisant les quelques valeurs particulières de xj.

On notera en outre que, si pour une application particulière on tombe sur un grand nombre de valeurs de xj (cas de 720 données susmentionné), on pourra choisir fictivement un nombre plus élevé (722 données) pour arriver à un petit nombre de valeurs xj, les données excédentaires étant éliminées (dans le cas d'une application à la télévision elles apparaîtront pendant la durée du retour ligne).

Pour obtenir une conversion inverse de dents de scie en balayage ligne il suffira de lire les données mémorisées dans la ROM en sens inverse du sens initialement prévu pour la conversion de balayage ligne en balayage en dents de scie.

## Revendications

1. Dispositif de conversion d'un balayage linéaire de lignes successives de N données en un balayage en dents de scie par bandes d'une hauteur de M lignes et couvrant toutes les données de ces M lignes, caractérisé en ce qu'il comprend :

- une mémoire de MN mots dans laquelle sont séquentiellement écrites les MN premières données puis dans laquelle les données suivantes sont séquentiellement écrites tandis que les données existantes sont lues en de mêmes adresses successives $A_{i,j}$, i déterminant un numéro d'ordre des données dans la mémoire ($0<i<MN-1$) et j un numéro de bande ($1<j<n$), et
- un générateur d'adresse fournissant lesdites adresses $A_{i,j}$ de sorte que $A_{i+1,j} = (A_{i,j} + x_j)$ Modulo$(MN-1)$, $x_j$ étant un nombre tel que $x_{j+1} = N.x_j$ Modulo$(MN-1)$ et $x_1 = 1$.

2. Dispositif selon la revendication 1, caractérisé en ce que le générateur d'adresse comprend :

un premier registre (R1) de la valeur $x_j$,

un deuxième registre (R2) de valeur d'adresse ($A_{i,j}$),

un additionneur (S1) additionnant la sortie du premier registre et la sortie du deuxième registre ($x_j + A_{i,j}$),

des moyens (S2, SEL1) pour transférer la plus petite des valeurs positives ($x_j + A_{i,j}$) et $[x_j + A_{i,j} - (MN-1)]$ vers le deuxième registre,

des moyens pour, à chaque changement de bande, transférer la valeur ($x_{j+1}$) dans le premier registre ($x_j$), et forcer à zéro le contenu du deuxième registre ($A_{0,j}$).

3. Dispositif selon la revendication 2, caractérisé en ce que les valeurs xj sont prémémorisées.

4. Dispositif selon la revendication 2, caractérisé en ce que les valeurs xj sont fournies par un circuit comprenant :

un multiplieur par N recevant la valeur xj et fournissant Nxj,

un troisième registre (R3) recevant la plus petite des valeurs positives Nxj et Nxj Modulo $(MN-1)$.

## Patentansprüche

1. Vorrichtung zum Umwandeln einer Zeilenabtastung von aufeinanderfolgenden Zeilen mit N Daten in eine Sägezahn-Abtastung über Streifen mit einer Höhe von M Zeilen, welche alle Daten dieser M Zeilen abdeckt, dadurch gekennzeichnet, daß sie umfaßt:

- einen Speicher mit M·N Wörtern, in welchen sequentiell die ersten M·N Daten eingeschrieben werden, in welchen danach die nachfolgenden Daten, während die vorhandenen Daten gelesen werden, bei denselben aufeinanderfolgenden Adressen $A_{i,j}$ sequentiell geschrieben werden, wobei i eine Ordnungszahl für die Daten in dem Speicher ($0<i<M·N-1$) und j eine Streifennummer ($1<j<n$) bezeichnet, und
- einen Adressengenerator, welcher die Adressen $A_{i,j}$ derart liefert, daß $A_{i+1,j} = (A_{i,j} + X_j)$ modulo$(M·N-1)$, wobei $X_j$ eine derartige Zahl ist, daß $X_{j+1} = N·x_j$ modulo$(M·N-1)$ und $x_1 = 1$.

2. Vorrichtung nach Anspruch 1, dadurch gekennzeichnet, daß der Adressengenerator umfaßt:

- ein erstes Register (R1) für den Wert $X_j$,
- ein zweites Register (R2) für den Wert einer Adresse ($A_{i,j}$),
- einen Addierer (S1), welcher den Ausgang des ersten Registers und den Ausgang des zweiten Registers addiert ($x_j + A_{i,j}$),

- eine Einrichtung (S2, SEL1) zum Übertragen des kleineren der positiven Werte ($x_j + A_{i,j}$) und [$x_j + A_{i,j} - (M \cdot N-1)$] in das zweite Register,
- eine Einrichtung, um bei jedem Wechsel des Streifens den Wert ($x_{j+1}$) in das erste Register ($x_j$) zu übertragen und den Inhalt des zweiten Registers ($A_{0,j}$) auf Null zu setzen.

3. Vorrichtung nach Anspruch 2, dadurch gekennzeichnet, daß die $x_j$-Werte vorgespeichert sind.

4. Vorrichtung nach Anspruch 2, dadurch gekennzeichnet, daß die $x_j$-Werte durch eine Schaltung geliefert werden, welche umfaßt:
- eine Einrichtung zum Multiplizieren mit N, welche den Wert $x_j$ empfängt und $N \cdot x_j$ liefert,
- ein drittes Register (R3), welches den kleineren der beiden positiven Werte $N \cdot x_j$ und $N \cdot x_j$ modulo($M \cdot N-1$) empfängt.

**Claims**

1. A device for converting a horizontal scanning of successive lines of N data into a saw tooth scanning of stripes, each stripe having a height of M lines and including all the data of these M lines, characterized in that it comprises:
- a MN-words memory, wherein are sequentially written the first MN data, then wherein the following data are sequentially written while the existing data are read out at same successive addresses $A_{i,j}$, i determining a sequence number of the data in the memory ($0 < i < MN-1$) and j determining a stripe number ($1 < j < n$), and
- an address generator supplying said addresses $A_{i,j}$ so that $A_{i+1,j}$ ($A_{i,j} + x_j$) Modulo($MN-1$), $X_j$ being a number such that $x_{j+1} = N \cdot x_j$ Modulo($MN-1$) and $x_j = 1$.

2. A device according to claim 1, characterized in that the address generator comprises:
a first register (R1) for the value $x_j$,
a second register (R2) for an address value ($A_{i,j}$),
an adder (S1) adding the output of the first register and the output of the second register ($x_j + A_{i,j}$),
means (S2, SEL1) for transferring the lowest of the positive values ($xj + A_{i,j}$) and [$x_j + A_{i,j} - (MN-1)$] towards the second register,
means for transferring value ($x_{j+1}$) into the first register ($x_j$), at each stripe change, and clearing the content of the second register ($A_{0,j}$).

3. A device according to claim 2, characterized in that values $x_j$ are prestored.

4. A device according to claim 2, characterized in that the values $x_j$ are supplied by a circuit comprising:
a multiplier by N receiving the value $x_j$ and supplying $Nx_j$,
a third register (R3) receiving the lowest of the positive values $Nx_j$ and $Nx_j$ Modulo($MN-1$).

N

M

**Figure 1**

| 0 | 1 | 2 | 3 | 4 | 5 | 6 |
|---|---|---|---|---|---|---|
| 0 | 1 | 2 | 3 | 4 | 5 | 6 |
| 7 | 8 | 9 | 10 | 11 | 12 | 13 |
| 7 | 8 | 9 | 10 | 11 | 12 | 13 |
| 14 | 15 | 16 | 17 | 18 | 19 | 20 |
| 14 | 15 | 16 | 17 | 18 | 19 | 20 |

**Figure 2**

| 0 | 1 | 2 | 3 | 4 | 5 | 6 |
|---|---|---|---|---|---|---|
| 0 | 3 | 6 | 9 | 12 | 15 | 18 |
| 7 | 8 | 9 | 10 | 11 | 12 | 13 |
| 1 | 4 | 7 | 10 | 13 | 16 | 19 |
| 14 | 15 | 16 | 17 | 18 | 19 | 20 |
| 2 | 5 | 8 | 11 | 14 | 17 | 20 |

**Figure 3**

| 0 | 1 | 2 | 3 | 4 | 5 | 6 |
|---|---|---|---|---|---|---|
| 0 | 9 | 18 | 7 | 16 | 5 | 14 |
| 7 | 8 | 9 | 10 | 11 | 12 | 13 |
| 3 | 12 | 1 | 10 | 19 | 8 | 16 |
| 14 | 15 | 16 | 17 | 18 | 19 | 20 |
| 6 | 15 | 4 | 13 | 2 | 11 | 20 |

**Figure 4**

| 0 | 1 | 2 | 3 | 4 | 5 | 6 |
|---|---|---|---|---|---|---|
| 0 | 7 | 14 | 1 | 8 | 15 | 2 |
| 7 | 8 | 9 | 10 | 11 | 12 | 13 |
| 9 | 16 | 3 | 10 | 17 | 4 | 11 |
| 14 | 15 | 16 | 17 | 18 | 19 | 20 |
| 18 | 5 | 12 | 19 | 6 | 13 | 20 |

**Figure 5**

Figure 6